# EUROPEAN PATENT SPECIFICATION

(11) **EP 3 782 889 B1**
(45) Date of publication and mention of the grant of the patent: **05.01.2022**
(21) Application number: 20181526.3
(22) Date of filing: 23.06.2020
(51) Int. Cl.: B62J 17/04, B62J 6/022

(54) **SCOOTER TYPE VEHICLE**
ROLLERARTIGES FAHRZEUG
VÉHICULE DE TYPE SCOOTER

(30) Priority: 21.08.2019 JP 2019150940
(43) Date of publication of application: 24.02.2021
(73) Proprietor: Yamaha Hatsudoki Kabushiki Kaisha, Iwata-shi, Shizuoka 438-8501 (JP)
(72) Inventor: CHIEN, I-Lun, 320 Taoyuan City (TW); TSAI, Cheng-Ting, 320 Taoyuan City (TW); CHEN, Yen-Fu, 320 Taoyuan City (TW)
(74) Representative: Grünecker Patent- und Rechtsanwälte PartG mbB

(56) References cited:
- EP-A1- 2 343 233
- CN-A- 1 660 643
- JP-A- 2016 016 679
- US-A1- 2006 056 191

## Description

The present invention relates to a scooter type vehicle.

Some scooter type vehicles include a headlight and a position light. For example, in the scooter type vehicle of Japanese Patent Application Laid-Open JP2016-16679, a headlight and a position light are arranged on a front cover.

The scooter type vehicle have a larger front cover than other types of straddled vehicles. Therefore, in the scooter type vehicle in which the position light is disposed on the front cover, a large light emitting area of the position light can be easily secured. However, since the distance between the headlight and the position light is small, the light of the position light easily interferes with the light of the headlight. Therefore, there is a possibility that the conspicuity of the scooter type vehicle by the position light may be reduced.

In JP2016-16679 described above, an auxiliary cover is disposed between the headlight and the position light. With the auxiliary cover, interference with the light of the headlight can be suppressed. As a result, the conspicuity of the scooter type vehicle by the position light is improved. However, the auxiliary cover on the front cover increases the size of the vehicle.

Another scooter type vehicle is shown in the document US 2006/0056191 A1. It shows a headlight on the front cover and position lights on the handle cover.

It is an object of the present invention to provide a scooter type vehicle that secures vehicle conspicuity by a position light while suppressing an increase in size of the vehicle. According to the present invention said object is solved by a scooter type vehicle having the features of independent claim 1. Preferred embodiments are laid down in the dependent claims.

It as been attempted to devise a layout with a front cover in order to improve the conspicuity of a scooter type vehicle using a position light. For example, it as been considered to greatly separate the positions of the position light and the headlight. In addition, it as been considered expanding the light emitting area of the position light. However, in this case, it is difficult to suppress an increase in the size of the front cover. For this reason, it as been considered placing the position light on the handle cover in order to improve the conspicuity of the scooter type vehicle by the position light.

However, in a scooter type vehicle, the handle cover is smaller than the front cover. Therefore, in the handle cover, the space for disposing the position light is small, and it is difficult to secure a large light emitting area. In addition, a transparent screen is disposed in front of the handle cover. Therefore, it is necessary to devise an arrangement of the screen.

Therefore, it as been considered a configuration in which the position light is arranged behind the screen and the screen covers the position light from the front in order to secure the wind guiding function of the screen. However, in this case, it is difficult to secure the light emitting area of the position light. Further, the light of the position light is diffused on the screen, and the outline of the light of the position light is blurred. Therefore, it is even more difficult to ensure the scooter type vehicle's conspicuity with the position light.

It as been considered paid close attention to the shape of the position light and it as been considered that by designing the shape of the light of the position light, it is possible to secure the conspicuity of the scooter type vehicle even if the light emitting area of the position light is small. Furthermore, it as been considered that the wind guiding function of the windscreen can be maintained at the same time by designing the shape of the position light.

A scooter type vehicle according to one aspect includes a front cover, a headlight, a handle, a handle cover, a screen, and a position light. The headlight is arranged on the front cover. The handle is rotatably arranged with respect to the front cover. The handle cover is located above the front cover. The handle cover is rotatable with the handle. The screen is attached to the handle cover. The screen is arranged in front of the handle cover. The screen has a light-transmitting property. The position light is rotatable with the handle.

An upper end of the screen is located above an upper end of the handle cover. The screen includes an opening. The position light is arranged in the opening. The position light includes a light source, a lens, and an auxiliary cover. The lens transmits light from the light source. The auxiliary cover is opaque and is located between the lens and the screen. An outer surface of the lens is longer in a left-right direction than in a vertical direction.

In the scooter type vehicle according to the present aspect, the position light is disposed in the opening of the screen. Therefore, it is possible to suppress an increase in the size of the vehicle as compared with the case where the position light is arranged on the front cover. The position light rotates with the handle. Therefore, even if the position light is small in the left-right direction due to space restrictions in the handle cover, it is possible to improve the vehicle conspicuity by the position light in the traveling direction of the vehicle.

The position light is arranged in the opening of the screen. Therefore, the outline of the light of the position light is prevented from being blurred as compared with the case where the screen is arranged in front of the position light. Therefore, it is possible to improve the conspicuity of the scooter type vehicle by the position light.

Further, the opaque auxiliary cover is disposed between the lens and the screen, so that the shape of the position light become clear. This makes it possible to improve the scooter type vehicle conspicuity by the position light. In particular, the outer surface of the lens of the position light has a shape that is longer in the left-right direction than in the vertical direction. Therefore, the scooter type vehicle can be easily recognized.

The outer surface of the lens and the outer surface of the auxiliary cover may be arranged along the outer surface of the screen. In this case, the wind guiding effect of the screen can be maintained.

A concave groove may be provided between the screen and the auxiliary cover. In this case, rainwater easily flows down by the groove.

The lens may have a downward tapering shape. In this case, rainwater easily flows down due to the shape of the lens.

The lens and the screen may have a shape whose width increases upward. In this case, the light emitting area of the position light can be increased.

The position light may protrude forward from the handle cover. In this case, the conspicuity of the scooter type vehicle by the position light can be further improved.

The scooter type vehicle may further include a meter unit attached to the handle cover. The lens, the auxiliary cover, and the screen may be visible when viewed from a direction perpendicular to the upper surface of the meter unit. In this case, the conspicuity of the scooter type vehicle by the position light can be further improved.

The front cover may include an attachment portion for a license plate. In this case, by arranging the position light on the screen, a space for the license plate can be secured on the front cover.

The position light may be attached to the auxiliary cover. In this case, mounting of the position light becomes easy.

A lower end of the lens may be located above a lower end of the screen. In this case, the conspicuity of the scooter type vehicle by the position light can be further improved.

The auxiliary cover may include an opening. The lens may be arranged in the opening of the auxiliary cover. In this case, mounting of the position light becomes easy.

The auxiliary cover may surround an entire circumference of the lens. In this case, the conspicuity of the scooter type vehicle by the position light can be further improved.

The upper end of the auxiliary cover may be located lower than the upper end of the handle cover. In this case, the field of view through the shield can be prevented from being narrowed by the auxiliary cover.

### ADVANTAGEOUS EFFECTS OF INVENTION

According to the present invention, in the scooter type vehicle, the conspicuity of the vehicle by the position light can be ensured, while suppressing an increase in size of the vehicle.

### BRIEF DESCRIPTION OF THE DRAWINGS

FIG. 1 is a side view of a scooter type vehicle according to an embodiment.
FIG. 2 is a front view of the scooter type vehicle.
FIG. 3 is a front view of a handle cover and a screen.
FIG. 4 is a sectional view taken along line IV-IV in FIG. 3.
FIG. 5 is a diagram showing the handle cover and the screen seen from a direction perpendicular to an upper surface of a meter unit.
FIG. 6 is an exploded perspective view of a position light, the screen, and the handle cover.
FIG. 7 is an exploded perspective view of a light unit.
FIG. 8 is a front view of the position light when lighting according to the present embodiment.
FIG. 9 is a front view of the position light when lighting according to a comparative example.

### DESCRIPTION OF EMBODIMENTS

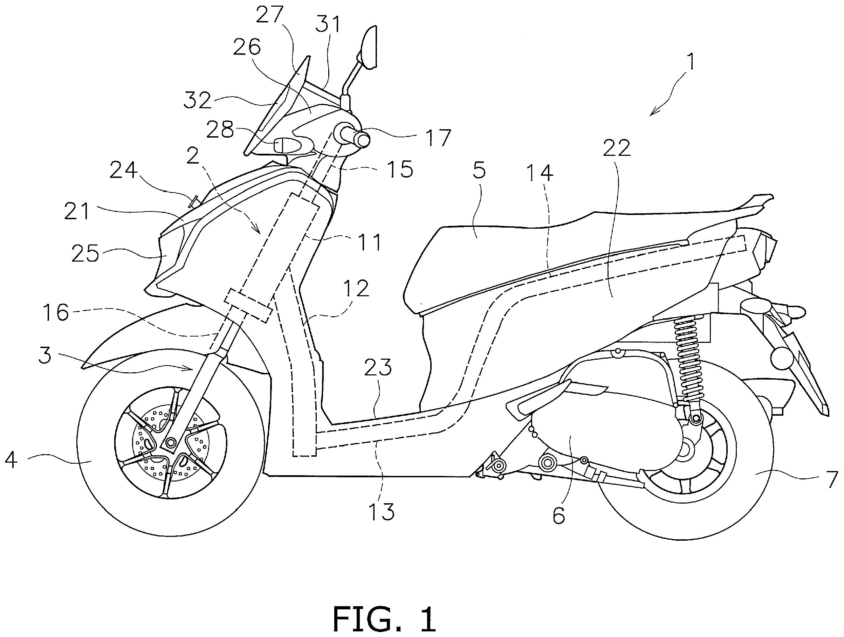

Hereinafter, a scooter type vehicle according to an embodiment will be described with reference to the drawings. FIG. 1 is a side view of a scooter type vehicle 1 according to an embodiment. The scooter type vehicle 1 includes a body frame 2, a steering device 3, a front wheel 4, a seat 5, a power unit 6, and a rear wheel 7. In the following description, the front, rear, left, and right directions refer to the directions as viewed from a rider sitting on the seat 5.

The body frame 2 includes a head pipe 11, a down frame 12, a lower frame 13, and a rear frame 14. The head pipe 11 extends forward and downward. The down frame 12 extends downward from the head pipe 11. The lower frame 13 extends rearward from a lower portion of the down frame 12. The rear frame 14 extends rearward and upward from a rear portion of the down frame 12.

The steering device 3 is rotatably supported by the head pipe 11. The steering device 3 rotatably supports the front wheel 4. The steering device 3 includes a steering shaft 15, a front fork 16, and a handle 17. The steering shaft 15 is rotatably supported by the head pipe 11. The front fork 16 is connected to a lower part of the steering shaft 15. The front fork 16 rotatably supports the front wheel 4. The handle 17 is connected to an upper portion of the steering shaft 15.

The seat 5 is arranged behind the head pipe 11. The seat 5 is arranged above the rear frame 14. The power unit 6 is arranged below the seat 5. The power unit 6 includes, for example, an internal combustion engine. Alternatively, the power unit 6 may include an electric motor. The rear wheel 7 is rotatably supported by the power unit 6.

The scooter type vehicle 1 includes a front cover 21, a rear cover 22, and a foot board 23. The front cover 21 covers the head pipe 11. The front cover 21 overlaps the head pipe 11 in the front view of the vehicle. The front cover 21 includes an attachment portion 24 for a license plate. A headlight 25 is arranged on the front cover 21. The rear cover 22 is arranged below the seat 5. The rear cover 22 covers the rear frame 14 from the lateral side. The foot board 23 is disposed between the front cover 21 and the rear cover 22. The foot board 23 is arranged in front of and below the seat 5. The foot board 23 is a portion on which a rider of the scooter type vehicle 1 places his or her feet. The foot board 23 has a flat shape. Alternatively, the foot board 23 may include a center tunnel portion projecting upward.

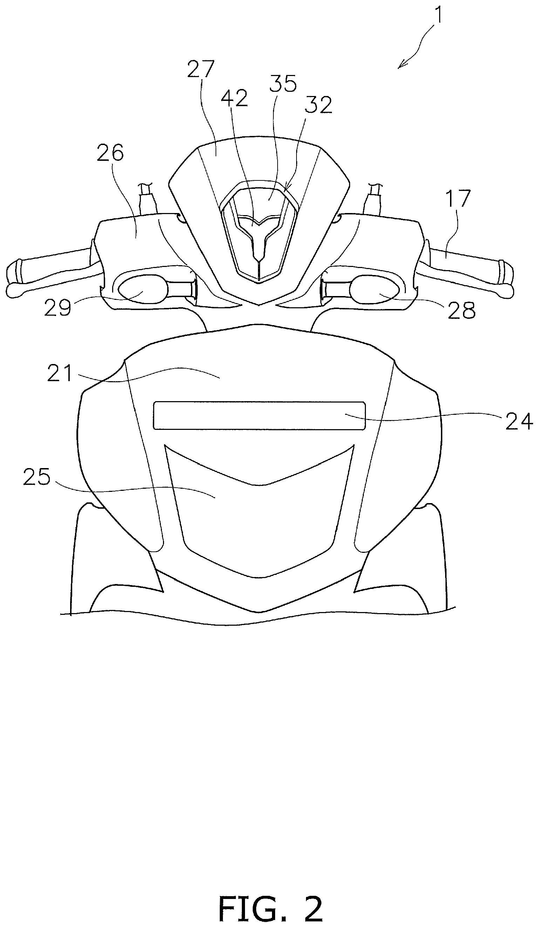

The scooter type vehicle 1 includes a handle cover 26 and a screen 27. The handle cover 26 covers a part of the handle 17. The handle cover 26 is located above the front cover 21. The handle cover 26 is located above the head pipe 11. The handle cover 26 is rotatable with respect to the front cover 21 together with the handle 17. FIG. 2 is a front view of the scooter type vehicle 1. As illustrated in FIG. 2, left and right flashers 28 and 29 are disposed on the handle cover 26. However, the arrangement of the left and right flashers 28 and 29 may be changed. For example, the right and left flashers 28 and 29 may be arranged on the front cover 21.

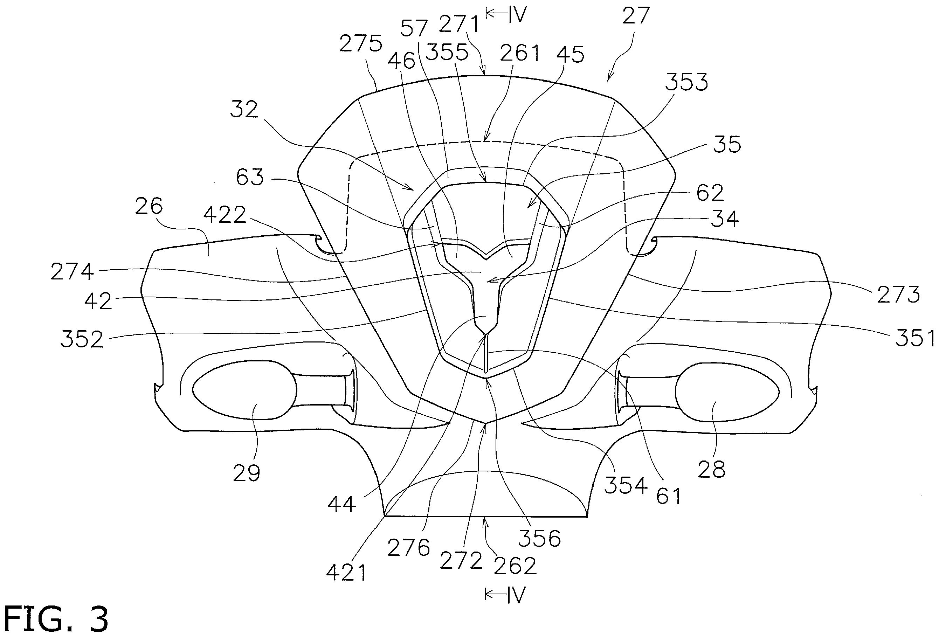

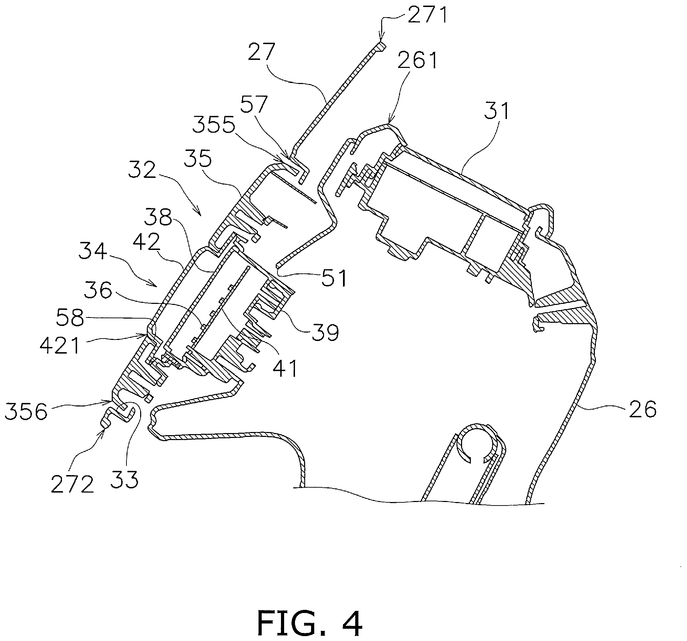

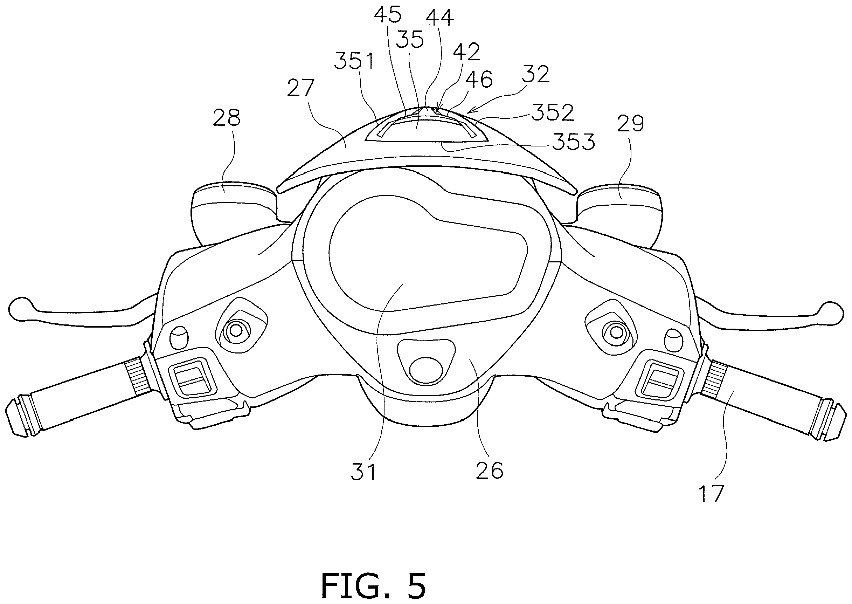

FIG. 3 is a front view of the handle cover 26 and the screen 27. FIG. 4 is a sectional view taken along line IV-IV in FIG. 3. As illustrated in FIG. 4, a meter unit 31 is attached to the handle cover 26. The meter unit 31 includes, for example, a speedometer. The meter unit 31 is disposed on the upper surface of the handle cover 26. FIG. 5 is a diagram illustrating the handle cover 26 and the screen 27 as viewed from a direction perpendicular to the upper surface of the meter unit 31.

The screen 27 is attached to the handle cover 26. The screen 27 is rotatable with respect to the front cover 21 together with the handle 17. The screen 27 has translucency. The screen 27 is made of, for example, resin. The screen 27 is arranged in front of the handle cover 26. The screen 27 has a shape that tapers downward in the front view of the vehicle. As illustrated in FIG. 2, the screen 27 is smaller than the front cover 21 in the width direction of the vehicle. The screen 27 is smaller than the handle cover 26 in the width direction of the vehicle.

As illustrated in FIG. 3, the upper end 271 of the screen 27 is located above the upper end 261 of the handle cover 26 in the front view of the vehicle. The lower end 272 of the screen 27 is located above the lower end 262 of the handle cover 26 in the front view of the vehicle. The lower end 272 of the screen 27 is located above the front cover 21 in the front view of the vehicle. The screen 27 includes a left side edge 273 and a right side edge 274. The left side edge 273 is inclined upward and leftward in the front view of the vehicle. The right side edge 274 is inclined upward and rightward in the front view of the vehicle. The screen 27 includes an upper edge 275 and a lower edge 276. The upper edge 275 has a shape convexly curved upward. The lower edge 276 has a shape convexly curved downward. As illustrated in FIGS. 4 and 5, the screen 27 is disposed in front of the meter unit 31. As illustrated in FIG. 4, the upper end 271 of the screen 27 is located above the meter unit 31.

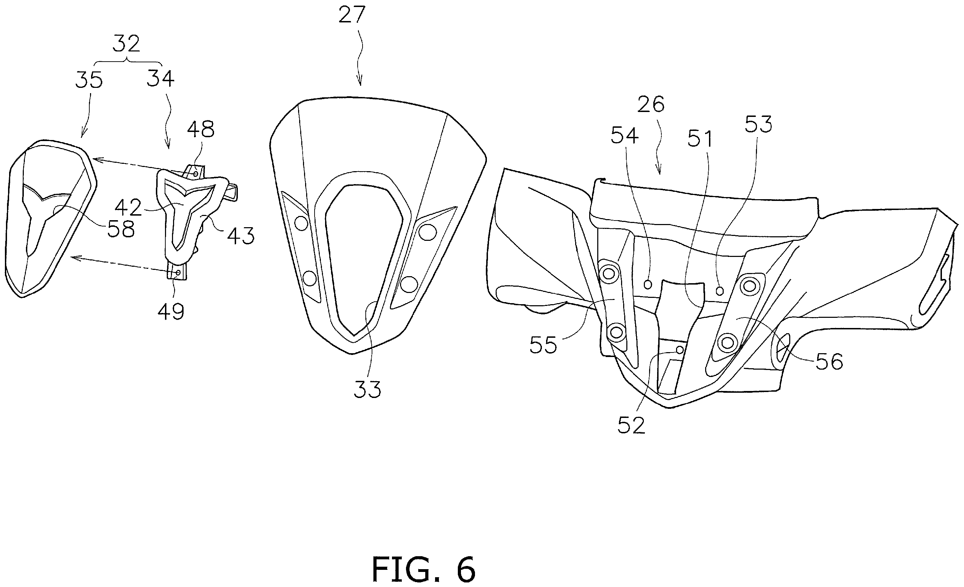

The scooter type vehicle 1 includes a position light 32. The position light 32 is disposed on the screen 27 and is rotatable with respect to the front cover 21 together with the handle 17. FIG. 6 is an exploded perspective view of the position light 32, the screen 27, and the handle cover 26. As illustrated in FIG. 6, the screen 27 includes an opening 33. The opening 33 has a shape that matches the outer shape of the position light 32. The position light 32 is arranged in the opening 33.

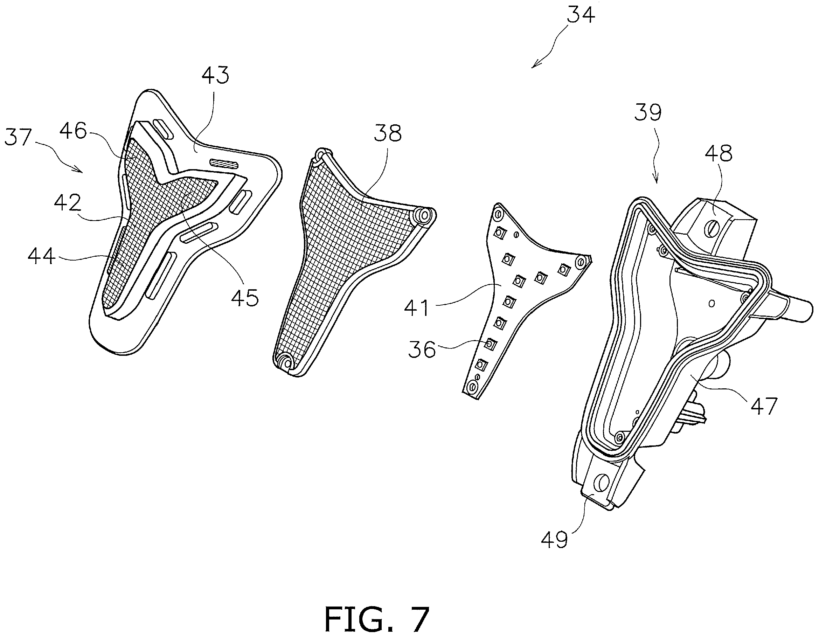

The position light 32 includes a light unit 34 and an auxiliary cover 35. The light unit 34 is attached to the auxiliary cover 35. FIG. 7 is an exploded perspective view of the light unit 34. As illustrated in FIG. 7, the light unit 34 includes a light source 36, an outer member 37, an inner member 38, and a housing 39. The light source 36 is attached to a substrate 41. The light source 36 is, for example, a light emitting diode. However, the light source 36 may be another light source such as a bulb. In the drawings, only some of the light sources 36 are denoted by reference numerals, and reference numerals of other light sources 36 are omitted. The number of light sources 36 is not limited to a plurality, and may be one.

The outer member 37 has translucency. The outer member 37 is made of, for example, resin. The outer member 37 transmits light from the light source 36. The outer member 37 includes a lens 42 and an edge 43. The lens 42 protrudes from the edge 43. The lens 42 is exposed to the outside. As illustrated in FIG. 3, the outer surface of the lens 42 is longer in the left-right direction than in the vertical direction. The lens 42 has a shape that tapers downward. The lens 42 and the screen 27 have a shape whose width increases upward.

The lens 42 includes a first portion 44, a second portion 45, and a third portion 46. The first portion 44 extends in the vertical direction in the front view of the vehicle. The second portion 45 extends leftward and upward from the upper end of the first portion 44 in the front view of the vehicle. The third portion 46 extends rightward and upward from the upper end of the first portion 44 in the front view of the vehicle.

The lower end 421 of the lens 42 is located above the lower end 272 of the screen 27 in the front view of the vehicle. The lower end 421 of the lens 42 is located above the lower end 262 of the handle cover 26 in the front view of the vehicle. The lower end 421 of the lens 42 is located above the left and right flashers 28 and 29 in the front view of the vehicle. The upper end 422 of the lens 42 is located below the upper end 271 of the screen 27 in the front view of the vehicle. The upper end 422 of the lens 42 is located below the upper end 261 of the handle cover 26 in the front view of the vehicle.

The inner member 38 illustrated in FIG. 7 has translucency. The inner member 38 is made of, for example, a resin. The inner member 38 transmits light from the light source 36. The inner member 38 is disposed between the outer member 37 and the housing 39. The inner member 38 is disposed between the outer member 37 and the light source 36. The housing 39 is opaque. The housing 39 is made of, for example, resin. The housing 39 houses the light source 36. The outer member 37, the inner member 38, and the substrate 41 are attached to the housing 39.

The housing 39 is attached to the auxiliary cover 35. As illustrated in FIG. 7, the housing 39 includes a main body 47, a first attachment portion 48, and a second attachment portion 49. The first attachment portion 48 protrudes upward from the main body 47. The second attachment portion 49 protrudes downward from the main body 47. The first attachment portion 48 and the second attachment portion 49 are attached to the auxiliary cover 35 by attachment members such as screws. Thus, the position light 32 is attached to the auxiliary cover 35.

As illustrated in FIGS. 4 and 6, the handle cover 26 includes an opening 51. A part of the housing 39 is disposed in the opening 51 of the handle cover 26. The wiring connected to the light unit 34 is passed through the opening 51. As illustrated in FIG. 4, the position light 32 protrudes forward from the handle cover 26.

The position light 32 is attached to the handle cover 26. As illustrated in FIG. 6, the handle cover 26 includes attachment portions 52 to 54 for the position light 32. The housing 39 is mounted to the attachment portions 52 to 54 for the position light 32 by mounting members such as screws. The handle cover 26 includes attachment portions 55 and 56 for the screen 27. The screen 27 is attached to the attachment portions 55 and 56 for the screen 27 by attaching members such as screws.

The auxiliary cover 35 is disposed between the lens 42 and the screen 27. The auxiliary cover 35 is disposed between the outer edge of the lens 42 and the edge of the opening 33 of the screen 27. The auxiliary cover 35 is opaque. The auxiliary cover 35 is made of, for example, resin. The auxiliary cover 35 has an outer shape that matches the opening 33 of the screen 27. The auxiliary cover 35 is disposed in the opening 33 of the screen 27. The screen 27 surrounds the entire circumference of the auxiliary cover 35. As illustrated in FIGS. 3 and 4, a concave groove 57 is provided between the screen 27 and the auxiliary cover 35. The groove 57 is provided along the entire circumference of the auxiliary cover 35.

As illustrated in FIG. 3, the auxiliary cover 35 includes a left side edge 351 and a right side edge 352. The left side edge 351 is inclined upward and leftward in the front view of the vehicle. The right side edge 352 is inclined upward and rightward in the front view of the vehicle. The auxiliary cover 35 includes an upper edge 353 and a lower edge 354. The upper edge 353 has a shape curved convexly upward. The lower edge 354 has a shape curved convexly downward. The upper end 355 of the auxiliary cover 35 is located lower than the upper end 261 of the handle cover 26 in the front view of the vehicle. The upper end 355 of the auxiliary cover 35 is located lower than the upper end 271 of the screen 27 in the front view of the vehicle. The upper end 355 of the auxiliary cover 35 is located lower than the upper end of the meter unit 31 in the front view of the vehicle. The lower end 356 of the auxiliary cover 35 is located above the lower end 272 of the screen 27 in the front view of the vehicle.

As illustrated in FIG. 6, the auxiliary cover 35 includes an opening 58. The opening 58 of the auxiliary cover 35 has a shape that matches the outer shape of the lens 42. The lens 42 is arranged in the opening 58 of the auxiliary cover 35. The auxiliary cover 35 surrounds the entire circumference of the lens 42.

As illustrated in FIG. 3, the surface of the auxiliary cover 35 includes a plurality of convex grooves 61 to 63. The plurality of grooves 61 to 63 include a first groove 61, a second groove 62, and a third groove 63. The first groove 61 extends downward from the first portion 44 of the lens 42. The second groove 62 extends upward from the second portion 45 of the lens 42. The third groove 63 extends upward from the third portion 46 of the lens 42.

As illustrated in FIG. 4, the outer surface of the lens 42 and the outer surface of the auxiliary cover 35 are arranged along the outer surface of the screen 27. Note that "along" means that a certain element maintains a predetermined distance from another element. The outer surface of the lens 42 is flush with the outer surface of the auxiliary cover 35. The outer surface of the auxiliary cover 35 is flush with the outer surface of the screen 27. Note that "being flush" does not necessarily mean that a certain element and another element are completely flat, and may have a difference in position within a predetermined range.

In a side view of the vehicle, the screen 27 is inclined upward and rearward. In the side view of the vehicle, the auxiliary cover 35 is inclined upward and rearward. In the side view of the vehicle, the lens 42 is inclined upward and rearward. That is, in the side view of the vehicle, the screen 27, the auxiliary cover 35, and the lens 42 are all inclined upward and rearward. However, the inclination angles of the screen 27, the auxiliary cover 35, and the lens 42 may be different.

As illustrated in FIG. 5, the lens 42, the auxiliary cover 35, and the screen 27 are visible when viewed from a direction perpendicular to the upper surface of the meter unit 31. The second portion 45 and the third portion 46 of the lens 42 are visible when viewed from the direction perpendicular to the upper surface of the meter unit 31. When viewed from the direction perpendicular to the upper surface of the meter unit 31, at least a portion of the first portion 44 of the lens 42 is visible. When viewed from the direction perpendicular to the upper surface of the meter unit 31, the upper edge 353 of the auxiliary cover 35 is visible. When viewed from the direction perpendicular to the upper surface of the meter unit 31, at least a part of the left side edge 351 and the right side edge 352 of the auxiliary cover 35 is visible.

In the scooter type vehicle 1 according to the present embodiment described above, the position light 32 is disposed in the opening 33 of the screen 27. Therefore, compared to the case where the position light 32 is disposed on the front cover 21, the size of the scooter type vehicle 1 can be reduced. The position light 32 rotates together with the handle 17. Therefore, even if the position light 32 is small in the left-right direction due to space restrictions in the handle cover 26, it is possible to improve the conspicuity of the scooter type vehicle 1 by the position light 32 in the traveling direction of the vehicle.

The position light 32 is disposed in the opening 33 of the screen 27. Therefore, the outline of the light of the position light 32 is prevented from being blurred as compared with the case where the screen 27 is arranged in front of the position light 32. Thereby, the conspicuity of the scooter type vehicle 1 by the position light 32 can be improved.

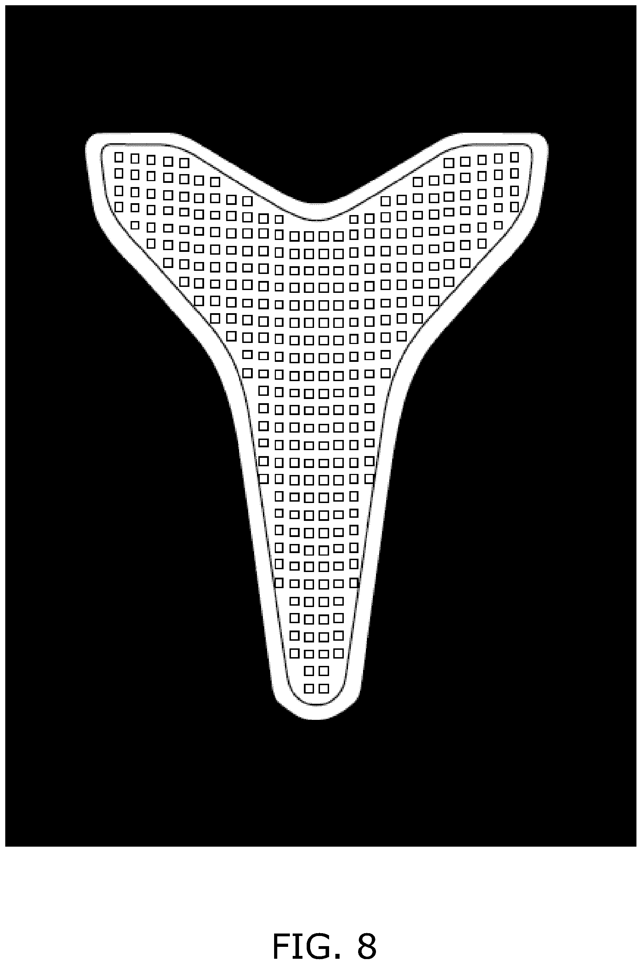

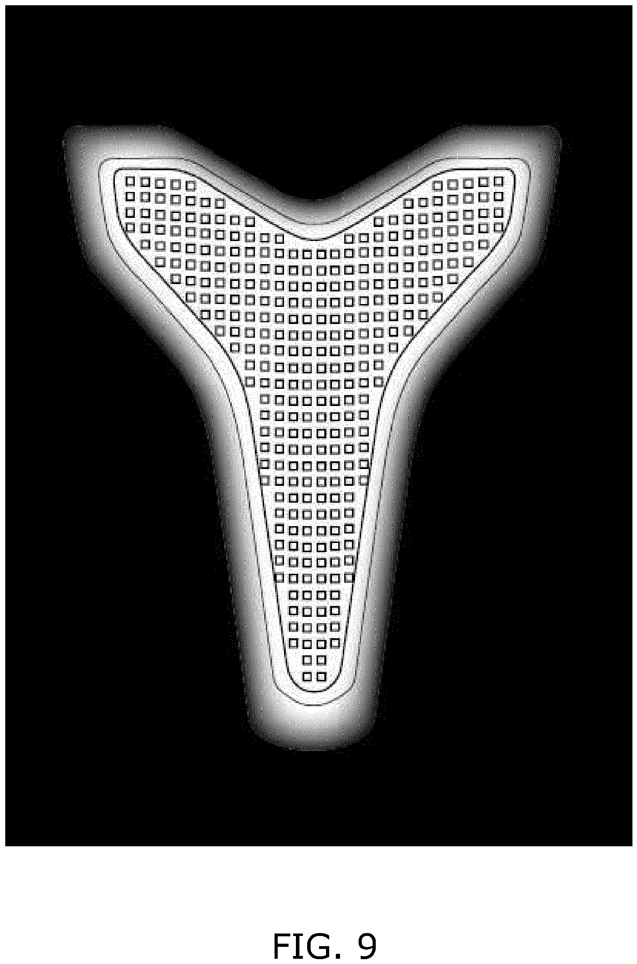

Further, since the opaque auxiliary cover 35 is disposed between the lens 42 and the screen 27, the shape of the light of the position light 32 is further clarified. For example, FIG. 8 is a front view of the position light 32 during lighting according to the present embodiment. FIG. 9 is a front view of the position light during lighting according to the comparative example. The position light according to the comparative example does not have the opaque auxiliary cover. Therefore, part of the light from the lens leaks to the screen. On the other hand, in the position light 32 according to the present embodiment, the shape of the light of the position light 32 is clarified by suppressing light leakage by the opaque auxiliary cover 35. Thereby, the conspicuity of the scooter type vehicle 1 by the position light 32 can be improved. In particular, the outer surface of the lens 42 of the position light 32 has a shape longer in the left-right direction than in the vertical direction. Therefore, the scooter type vehicle 1 can be easily recognized.

The number of front wheels of the scooter type vehicle is not limited to one, and may be more than one. The number of rear wheels of the scooter type vehicle is not limited to one, and may be more than one. The shape and/or arrangement of the front cover 21, the handle cover 26, the screen 27, or the position light 32 may be changed.

The shape of the opening 33 of the screen 27 may be changed. For example, the opening 33 may be connected to the outer edge of the screen 27. The screen 27 may surround not limited to the entire circumference of the position light 32 but only a part of the position light 32.

The shape and/or arrangement of the lens 42 or the auxiliary cover 35 of the position light 32 may be changed. The shape of the opening 58 of the auxiliary cover 35 may be changed. For example, the opening 58 may be connected to the outer edge of the auxiliary cover 35. The auxiliary cover 35 may surround not limited to the entire circumference of the lens 42 but only a part of the lens 42. The inner member 38 may be omitted.

"Connected" is not limited to a direct connection, and may include an indirect connection. The term "connected" is not limited to the case where separate members are fixed to each other, but may include a case where a plurality of portions are continuous in an integrated member.

"Extend forward and backward, left and right, or up and down" is not limited to extending completely in the forward and backward, left and right, or up and down directions, and the smaller one of the angles formed with respect to those directions may be 45 ° or less. That is, "extend in the forward and backward, left-right, or up-down" may include a case extending in a direction inclined with respect to a complete forward and backward, left-right, or up-down direction.

### INDUSTRIAL APPLICABILITY

According to the present teaching, in a scooter type vehicle, the conspicuity of the vehicle by a position light can be ensured, while suppressing an increase in size of the vehicle.

### REFERENCE SIGNS LIST

- 17: Handle
- 21: Front cover
- 24: Attachment portion for a license plate
- 25: Headlight
- 26: Handle cover
- 27: Screen
- 31: Meter unit
- 32: Position Light
- 33: Opening of the screen
- 35: Auxiliary cover
- 36: Light source
- 42: Lens
- 57: Groove
- 58: Opening of the auxiliary cover

## Claims

1. A scooter type vehicle (1) comprising:
a front cover (21);
a headlight (25) arranged on the front cover (21);
a handle (17) rotatably arranged with respect to the front cover (21);
a handle cover (26) located above the front cover (21), in regards to a vehicle up-down direction, and rotatable with the handle (17);
a screen (27) attached to the handle cover (26), disposed in front of the handle cover (26), in regards to a vehicle forward-and-backward direction, and having a light-transmitting property; and
a position light (32) rotatable with the handle (17),
wherein
an upper end (271) of the screen (27) is located above an upper end (261) of the handle cover (26), in regards to a vehicle up-down direction,
the screen (27) includes an opening (33),
the position light (32) is disposed in the opening (33),
the position light (32) includes
a light source (36),
a lens (42) configured to transmit light from the light source (36), and
an auxiliary cover (35) disposed between the lens (42) and the screen (27), the auxiliary cover (35) being opaque,
an outer surface of the lens (42) is longer in a vehicle left-right direction than in the vehicle up-down direction.

2. The scooter type vehicle (1) according to claim 1, wherein the outer surface of the lens (42) and an outer surface of the auxiliary cover (35) are arranged along an outer surface of the screen (27).

3. The scooter type vehicle (1) according to claim 1, wherein a concave groove (57) is provided between the screen (27) and the auxiliary cover (35).

4. The scooter type vehicle (1) according to any one of claims 1 to 3, wherein the lens (42) has a shape that tapers downward, in regards to the vehicle up-down direction.

5. The scooter type vehicle (1) according to any one of claims 1 to 4, wherein the lens (42) and the screen (27) have a shape whose width, in regards to the vehicle left-right direction, increases upward, in regards to the vehicle up-down direction.

6. The scooter type vehicle (1) according to any one of claims 1 to 5, wherein the position light (32) protrudes forward from the handle cover (26), in regards to the vehicle forward-and-backward direction.

7. The scooter type vehicle (1) according to any one of claims 1 to 6, further comprising:
a meter unit (31) having an upper surface facing upward, in regards to the vehicle up-down direction, the meter unit (31) is attached to the handle cover (26), wherein
the lens (42), the auxiliary cover (35), and the screen (27) are visible when viewed downward from a direction perpendicular to the upper surface of the meter unit (31), in regards to the vehicle up-down direction.

8. The scooter type vehicle (1) according to any one of claims 1 to 7, wherein the front cover (21) includes an attachment portion (24) for a license plate.

9. The scooter type vehicle (1) according to any one of claims 1 to 8, wherein the position light (32) is attached to the auxiliary cover (35).

10. The scooter type vehicle (1) according to any one of claims 1 to 9, wherein a lower end of the lens (42) is located above a lower end of the screen (27), in regards to the vehicle up-down direction.

11. The scooter type vehicle (1) according to any one of claims 1 to 10, wherein the auxiliary cover (35) includes an opening (58), and
the lens (42) is disposed in the opening (58) of the auxiliary cover (35).

12. The scooter type vehicle (1) according to any one of claims 1 to 11, wherein the auxiliary cover (35) surrounds an entire circumference of the lens (42).

13. The scooter type vehicle (1) according to any one of claims 1 to 12, wherein an upper end (355) of the auxiliary cover (35) is located lower than the upper end (261) of the handle cover (26), in regards to the vehicle up-down direction.

## Patentansprüche

1. Ein Motorroller-Typ-Fahrzeug (1), das umfasst:
eine vordere Abdeckung (21);
einen Scheinwerfer (25), der auf der vorderen Abdeckung (21) angeordnet ist;
eine Lenkstange (17), die in Bezug auf die vordere Abdeckung (21) drehbar angeordnet ist;
eine Lenkstangen-Abdeckung (26), die oberhalb der vorderen Abdeckung (21) angeordnet ist, in Bezug auf die Fahrzeug-Auf-Ab-Richtung, und die mit der Lenkstange (17) drehbar ist;
einen Schirm (27), der an der Lenkstangen-Abdeckung (26) angebracht ist, die vor der Lenkstangen-Abdeckung (26) in Bezug auf eine Fahrzeug-Vorwärts-Rückwerts-Richtung angeordnet ist und eine lichtdurchlässige Eigenschaft aufweist; und
eine Positions-Leuchte (32), die mit der Lenkstange (17) drehbar ist,
wobei
ein oberes Ende (271) des Schirms (27) über einem oberen Ende (261) der Lenkstangen-Abdeckung (26) in Bezug auf die Fahrzeug-Auf-Ab-Richtung angeordnet ist,
der Schirm (27) eine Öffnung (33) beinhaltet,
die Positions-Leuchte (32) in der Öffnung (33) angeordnet ist,
die Positions-Leuchte (32) beinhaltet
eine Licht-Quelle (36),
eine Licht-Scheibe (42), die konfiguriert ist, um Licht von der Licht-Quelle (36) zu übertragen, und
eine Neben-Abdeckung (35), die zwischen der Licht-Scheibe (42) und dem Schirm (27) angeordnet ist, wobei die Neben-Abdeckung (35) undurchsichtig ist,
eine Außenfläche der Licht-Scheibe (42) ist länger in einer Fahrzeug-Links-Rechts-Richtung als in der Fahrzeug-Auf-Ab-Richtung.

2. Ein Motorroller-Typ-Fahrzeug (1) gemäß Anspruch 1, wobei die Außenfläche der Licht-Scheibe (42) und eine Außenfläche der Neben-Abdeckung (35) entlang einer äußeren Oberfläche der Scheibe (27) angeordnet sind.

3. Ein Motorroller-Typ-Fahrzeug (1) gemäß Anspruch 1, wobei eine konkave Nut (57) zwischen dem Schirm (27) und der Neben-Abdeckung (35) vorgesehen ist.

4. Ein Motorroller-Typ-Fahrzeug (1) gemäß einem der Ansprüche 1 bis 3, wobei die Licht-Scheibe (42) eine Form hat, die sich nach unten verjüngt in Bezug auf die Fahrzeug-Auf-Ab-Richtung.

5. Ein Motorroller-Typ-Fahrzeug (1) gemäß einem der Ansprüche 1 bis 4, wobei die Licht-Scheibe (42) und der Schirm (27) eine Form haben, deren Breite, in Bezug auf die Fahrzeug-Links-Rechts-Richtung, nach oben, in Bezug auf die Fahrzeug-Auf-Ab-Richtung zunimmt.

6. Ein Motorroller-Typ-Fahrzeug (1) gemäß einem der Ansprüche 1 bis 5, wobei die Positions-Leuchte (32) nach vorne aus der Lenkstangen-Abdeckung (26), in Bezug auf die Fahrzeug-Vorwärts-Rückwerts-Richtung, hervorsteht.

7. Ein Motorroller-Typ-Fahrzeug (1) gemäß einem der Ansprüche 1 bis 6, das weiterhin umfasst:
eine Instrumenten-Einheit (31), die eine obere Fläche hat, die nach oben gewandt ist, in Bezug auf die Fahrzeug-Auf-Ab-Richtung, die Instrumenten-Einheit (31) ist an der Lenkstangen-Abdeckung (26) angebracht, wobei
die Licht-Scheibe (42), die Neben-Abdeckung (35) und der Schirm (27) sichtbar sind, wenn sie aus einer Richtung senkrecht zu der oberen Fläche der Instrumenten-Einheit (31) in Bezug auf die Fahrzeug-Auf-Ab-Richtung nach unten betrachtet werden.

8. Ein Motorroller-Typ-Fahrzeug (1) gemäß einem der Ansprüche 1 bis 7, wobei die vordere Abdeckung (21) einen Befestigungs-Abschnitt (24) für ein Lizenz-Platte beinhaltet.

9. Ein Motorroller-Typ-Fahrzeug (1) gemäß einem der Ansprüche 1 bis 8, wobei die Positions-Leuchte (32) an der Neben-Abdeckung (35) angebracht ist.

10. Ein Motorroller-Typ-Fahrzeug (1) gemäß einem der Ansprüche 1 bis 9, wobei ein unteres Ende der Licht-Scheibe (42) oberhalb eines unteren Endes der Scheibe (27) in Bezug auf die Fahrzeug-Auf-Ab-Richtung angeordnet ist.

11. Ein Motorroller-Typ-Fahrzeug (1) gemäß einem der Ansprüche 1 bis 10, wobei die Neben-Abdeckung (35) eine Öffnung (58) beinhaltet, und
die Licht-Scheibe (42) in der Öffnung (58) der Neben-Abdeckung (35) angeordnet ist.

12. Ein Motorroller-Typ-Fahrzeug (1) gemäß einem der Ansprüche 1 bis 11, wobei die Neben-Abdeckung (35) einen gesamten Umfang der Licht-Scheibe (42) umgibt.

13. Ein Motorroller-Typ-Fahrzeug (1) gemäß einem der Ansprüche 1 bis 12, wobei ein oberes Ende (355) der Neben-Abdeckung (35) niedriger als das obere Ende (261) der Lenkstangen-Abdeckung (26) in Bezug auf die Fahrzeug-Auf-Ab-Richtung angeordnet ist.

## Revendications

1. Véhicule de type scooter (1) comprenant :
un capot avant (21) ;
un phare avant (25) agencé sur le capot avant (21);
un guidon (17) agencé en rotation par rapport au capot avant (21) ;
un couvre-guidon (26) situé au-dessus du capot avant (21), par rapport à une direction haut-bas du véhicule, et qui peut tourner avec le guidon (17) ;
un pare-brise (27) fixé sur le couvre-guidon (26), disposé devant le couvre-guidon (26), par rapport à une direction avant-arrière du véhicule, et ayant une propriété de transmission de la lumière ; et
un feu de position (32) pouvant tourner avec le guidon (17),
dans lequel
une extrémité supérieure (271) du pare-brise (27) est située au-dessus d'une extrémité supérieure (261) du couvre-guidon (26), par rapport à une direction haut-bas du véhicule,
le pare-brise (27) comporte une ouverture (33),
le feu de position (32) est disposé dans l'ouverture (33),
le feu de position (32) comprend
une source lumineuse (36),
une lentille (42) configurée pour transmettre la lumière émise par la source lumineuse (36), et
un capot auxiliaire (35) disposé entre la lentille (42) et le pare-brise (27), le capot auxiliaire (35) étant opaque,
une surface extérieure de la lentille (42) est plus longue dans une direction gauche-droite du véhicule que dans la direction haut-bas du véhicule.

2. Véhicule de type scooter (1) selon la revendication 1, dans lequel la surface extérieure de la lentille (42) et une surface extérieure du capot auxiliaire (35) sont agencées le long d'une surface extérieure du pare-brise (27).

3. Véhicule de type scooter (1) selon la revendication 1, dans lequel une rainure concave (57) est ménagée entre le pare-brise (27) et le capot auxiliaire (35).

4. Véhicule de type scooter (1) selon l'une quelconque des revendications 1 à 3, dans lequel la lentille (42) a une forme qui se rétrécit vers le bas, par rapport à la direction haut-bas du véhicule.

5. Véhicule de type scooter (1) selon l'une quelconque des revendications 1 à 4, dans lequel la lentille (42) et le pare-brise (27) ont une forme dont la largeur, par rapport à la direction gauche-droite du véhicule, augmente vers le haut, par rapport à la direction haut-bas du véhicule.

6. Véhicule de type scooter (1) selon l'une quelconque des revendications 1 à 5, dans lequel le feu de position (32) fait saillie en avant du couvre-guidon (26), par rapport à la direction avant-arrière du véhicule.

7. Véhicule de type scooter (1) selon l'une quelconque des revendications 1 à 6, comprenant en outre un bloc compteur (31) ayant une surface supérieure tournée vers le haut, par rapport à la direction haut-bas du véhicule, le bloc compteur (31) est fixé sur le couvre-guidon (26), dans lequel la lentille (42), le capot auxiliaire (35) et le pare-brise (27) sont visibles lorsque le regard est dirigé vers le bas depuis une direction perpendiculaire à la surface supérieure du bloc compteur (31), par rapport à la direction haut-bas du véhicule.

8. Véhicule de type scooter (1) selon l'une quelconque des revendications 1 à 7, dans lequel le capot avant (21) comprend une partie de fixation (24) pour une plaque d'immatriculation.

9. Véhicule de type scooter (1) selon une quelconque des revendications 1 à 8, dans lequel le feu de position (32) est fixé sur le capot auxiliaire (35).

10. Véhicule de type scooter (1) selon l'une quelconque des revendications 1 à 9, dans lequel une extrémité inférieure de la lentille (42) est située au-dessus d'une extrémité inférieure du pare-brise (27), par rapport à la direction haut-bas du véhicule.

11. Véhicule de type scooter (1) selon l'une quelconque des revendications 1 à 10, dans lequel le capot auxiliaire (35) comporte une ouverture (58), et
la lentille (42) est disposée dans l'ouverture (58) du capot auxiliaire (35).

12. Véhicule de type scooter (1) selon l'une quelconque des revendications 1 à 11, dans lequel le capot auxiliaire (35) entoure une circonférence entière de la lentille (42).

13. Véhicule de type scooter (1) selon l'une quelconque des revendications 1 à 12, dans lequel une extrémité supérieure (355) du capot auxiliaire (35) est située plus bas que l'extrémité supérieure (261) du couvre-guidon (26), par rapport à la direction haut-bas du véhicule.
